(19) Europäisches Patentamt / European Patent Office / Office européen des brevets

(11) EP 4 270 064 A1

(12) **EUROPEAN PATENT APPLICATION**
published in accordance with Art. 153(4) EPC

(43) Date of publication:
01.11.2023 Bulletin 2023/44

(21) Application number: 21910865.1

(22) Date of filing: 22.12.2021

(51) International Patent Classification (IPC):
$G02B\ 5/02$ (2006.01)   $F21V\ 5/00$ (2018.01)
$F21V\ 5/04$ (2006.01)   $G02B\ 3/00$ (2006.01)

(52) Cooperative Patent Classification (CPC):
F21V 5/00; F21V 5/04; G02B 3/00; G02B 5/02

(86) International application number:
PCT/JP2021/047589

(87) International publication number:
WO 2022/138725 (30.06.2022 Gazette 2022/26)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 23.12.2020 JP 2020213993

(71) Applicant: Kyocera Corporation
Kyoto-shi Kyoto 612-8501 (JP)

(72) Inventor: YAMASAKI, Sho
Kyoto-shi, Kyoto 612-8501 (JP)

(74) Representative: Viering, Jentschura & Partner mbB
Patent- und Rechtsanwälte
Am Brauhaus 8
01099 Dresden (DE)

(54) **DIFFUSION PLATE, LIGHT-EMITTING DEVICE, AND SENSOR MODULE**

(57)   A diffuser includes a lens array including multiple single lenses. Each of the multiple single lenses satisfies Expression (1), which contains a conic constant and represents an aspheric lens, and Expression (3), which defines a relationship between the conic constant k and the ratio r/D of a radius of curvature r of the single lens to a pitch D of the single lenses. A ray of light incident on the single lens and parallel to an optical axis of the single lens does not strike an edge part of the single lens.

FIG. 1A

EP 4 270 064 A1

## Description

TECHNICAL FIELD

The present disclosure relates to a diffuser, a light-emitting device, and a sensor module.

BACKGROUND OF INVENTION

A known diffuser diffuses incident light through a lens array (refer to, for example, Japanese Unexamined Patent Application Publication No. 2017-026662).

SUMMARY

SOLUTION TO PROBLEM

In an embodiment of the present disclosure, a diffuser includes a lens array including multiple single lenses. Each of the multiple single lenses satisfies Expression (1), Expression (2), and Expression (3), which will be described later.

In another embodiment of the present disclosure, a diffuser includes a lens array including multiple single lenses. Each of the multiple single lenses satisfies Expression (1) and Expression (3), which will be described later. A ray of light incident on the single lens and parallel to an optical axis of the single lens does not strike an edge part of the single lens.

In further another embodiment of the present disclosure, a light-emitting device includes a light-emitting element and the above-described diffuser disposed on a path of light that is emitted from the light-emitting device.

In still another embodiment of the present disclosure, a sensor module includes the above-described light-emitting device and a light-receiving device capable of receiving light emitted from the light-emitting device.

BRIEF DESCRIPTION OF THE DRAWINGS

FIG. 1A is a sectional view of a diffuser according to an embodiment of the present disclosure.
FIG. 1B is a plan view of the diffuser according to the embodiment of the present disclosure.
FIG. 2 is a diagram illustrating a path of light in the diffuser according to the embodiment.
FIG. 3 is a graph illustrating boundary values of parameters of a single lens, the boundary values separating the non-occurrence of unnecessary reflection from the occurrence of unnecessary reflection.
FIG. 4 is a graph illustrating exemplary parameter values used in the single lens in the embodiment.
FIG. 5 is an angle distribution graph illustrating exemplary light distribution through the diffuser in the embodiment.

FIG. 6 is an illumination distribution graph illustrating exemplary light distribution through the diffuser in the embodiment.
FIG. 7 is a diagram illustrating an exemplary method of fabricating the diffuser according to the embodiment.
FIG. 8 is a diagram illustrating a light-emitting device according to an embodiment of the present disclosure and a sensor module according to an embodiment of the present disclosure.

DESCRIPTION OF EMBODIMENTS

Embodiments of the present disclosure will be described in detail below with reference to the drawings.

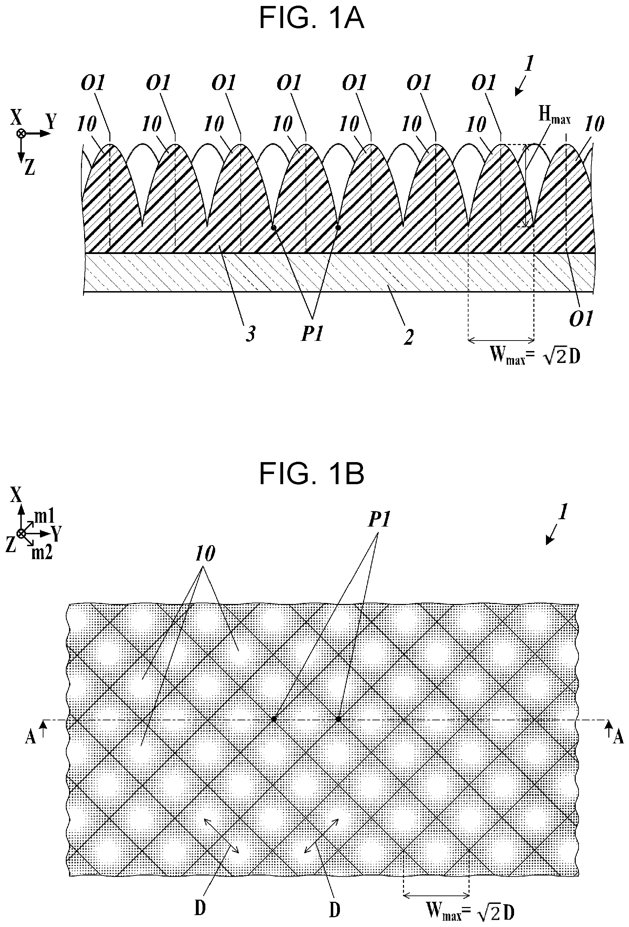

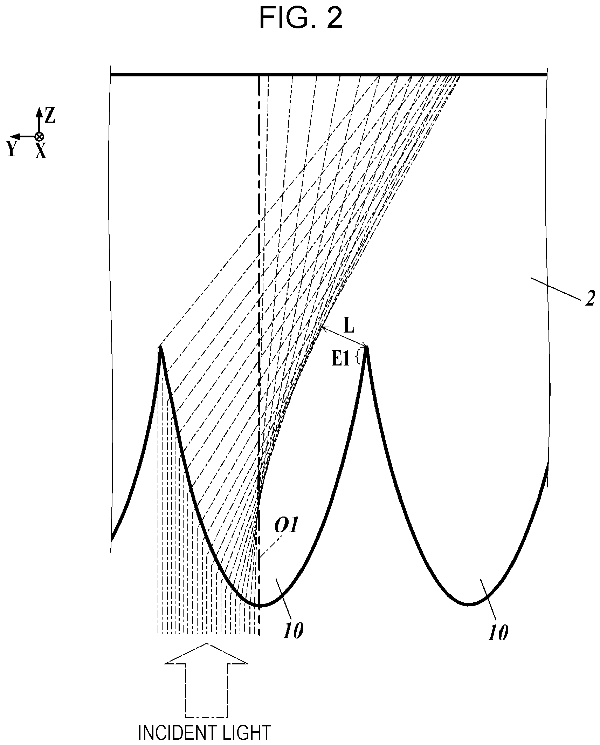

FIG. 1A is a sectional view of a diffuser according to an embodiment of the present disclosure. FIG. 1B is a plan view of the diffuser according to the embodiment. FIG. 1A illustrates a section taken along line A-A in FIG. 1B. FIG. 2 is a diagram illustrating a path of light in the diffuser according to the embodiment. In FIGs. 1A, 1B, and 2, the X and Y directions indicate directions (two directions perpendicular to each other) along a substrate surface of a transparent substrate 2, and the Z direction indicates a direction perpendicular to the substrate surface. The Z direction corresponds to a direction in which light enters.
As illustrated in FIG. 1A, a diffuser 1 according to the embodiment includes the transparent substrate 2, such as a glass substrate, and a lens array 3 disposed on the substrate surface of the transparent substrate 2. The lens array 3 includes multiple single lenses 10 arranged in the X and Y two-dimensional directions as viewed in the Z direction. FIGs. 1A and 1B illustrate an example in which the multiple single lenses 10 are arranged in a matrix in a row direction m1 and a column direction m2 at a constant pitch D. The multiple single lenses 10 are arranged such that a convex surface of each lens is oriented in a direction from which light comes. The multiple single lenses 10 may have optical axes O1 parallel to each other. The outline of the convex shape of each of the multiple single lenses 10 extends to a boundary with the next single lens 10.

<Convex Shape of Single Lens>

The single lens 10, which is an aspheric lens, satisfies Expression (1), Expression (2), and Expression (3).
[Math. 1]

$$z = \cfrac{\dfrac{h^2}{r}}{1 + \sqrt{1 - \dfrac{(1+k)}{r^2} h^2}} \quad \cdots (1)$$

$$\frac{r}{D} \geqq an^2 + bn + c$$
$$a = 8.84k^2 + 18.72k + 9.81$$
$$b = -31.73k^2 - 67.38k - 35.32$$
$$c = 29.42k^2 + 63.24k + 33.63$$
$$\cdots (2)$$

$$\frac{r}{D} \leqq \frac{5 + 4k}{4\sqrt{2}} \quad \cdots (3)$$

where z is sag, h is a distance from the optical axis O1, r is a radius of curvature, k is a conic constant, D is the pitch, and n is a refractive index.

Expression (1) represents a lens surface that has the radius of curvature r at the optical axis O1 and that is an aspheric lens. Changing the conic constant k changes the sag at a distance from the optical axis O1, so that the shape of the curved surface approximates an ellipsoid, a paraboloid, or a hyperboloid. A conic constant k of -1 or greater indicates that the lens surface is elliptical. A conic constant k of greater than -0.88 indicates that it is difficult for the single lens 10 included in the lens array 3 to maintain the shape of the lens. Therefore, a conic constant k of substantially less than or equal to -0.88 is used.

The single lens 10 satisfying Expression (1) is not limited to a case where the convex shape of the single lens 10 rigorously conforms to Expression (1). The single lens 10 may satisfy Expression (1) if the convex shape contains differences comparable to standard tolerances for the size of the single lens 10.

Expression (2) represents a condition that, as illustrated in FIG. 2, after parallel light (light parallel to the optical axis O1) incident on the single lens 10 is refracted, the light does not strike an edge part E1 of the single lens 10 that is located on an opposite side of the optical axis O1 from a light entrance side where the light enters the single lens. If the longitudinal dimension and the amount of light refraction are larger than those of the single lens 10 in FIG. 2, the refracted light will strike the edge part E1, causing unnecessary reflection, which disturbs a radiation pattern of diffused light. Expression (2) represents a condition to reduce the unnecessary reflection (hereinafter, also referred to as a "reflection reduction condition").

Expression (3) represents a condition that the aspect ratio (= maximum longitudinal dimension Hmax / Wmax, refer to FIG. 1A) of the single lens 10 is greater than or equal to 1. An aspect ratio of 1 or greater increases an area with a large angle formed by incident light and a normal to the lens surface and achieves wide-angle characteristics of diffused light. Therefore, Expression (3) represents a condition to provide wide-angle diffusion of light (hereinafter, also referred to as a "wide-angle characteristic condition").

Satisfying the conditions of Expressions (1) and (3) as well as the conditions of Expressions (1) and (2) can reduce unnecessary reflection while achieving the wide-angle characteristics of diffused light. In other words, a reduction of the disturbance in the radiation pattern of diffused light can be achieved as well as the wide-angle characteristics of diffused light.

<Reflection Reduction Condition>

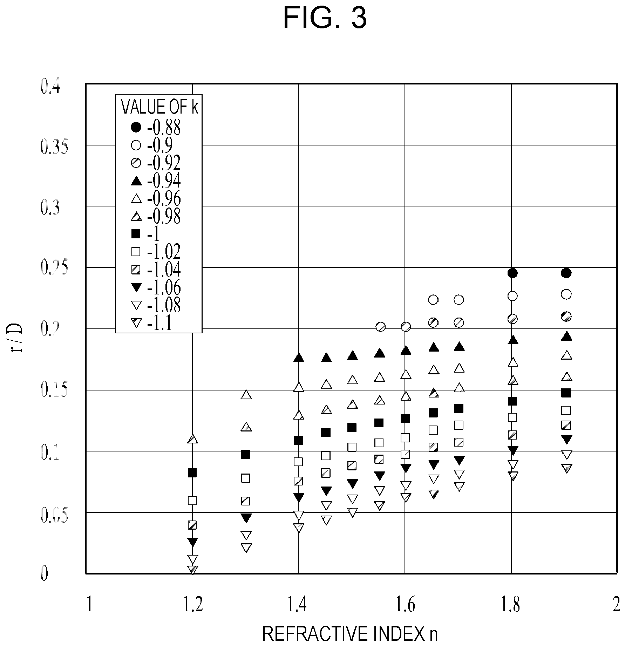

Expression (2) meeting the reflection reduction condition will now be demonstrated by describing exemplary derivation of Expression (2). FIG. 3 is a graph illustrating boundary values of parameters of a single lens, the boundary values separating the non-occurrence of unnecessary reflection from the occurrence of unnecessary reflection.

The graph of FIG. 3 illustrates parameter values, obtained by simulation, of the single lens 10 in which a distance L (FIG. 2) between the edge part E1 of the single lens 10 and an edge of a beam of light incident on the lens surface on the light entrance side or opposite side of the optical axis O1 from the edge part E1 is zero. Specifically, fixed values are assigned to the refractive index n and the conic constant k. The ratio r/D (ratio of the radius of curvature r of the lens surface to the pitch D) at which the above-described distance L is zero is obtained by simulation. The obtained ratio r/D is used as a boundary value for the reflection reduction condition at the above-described fixed values assigned to the refractive index n and the conic constant k. Such calculation is performed for each of multiple refractive indices n and each of multiple conic constants k, thereby obtaining the graph of FIG. 3. For the single lens 10 in which, for example, n = 1.5 and k = -1.0, if the ratio r/D is less than a value (= 0.12) at a plot point where n = 1.5 and k = -1.0, unnecessary reflection will occur. On the other hand, if the ratio r/D is greater than the value (= 0.12) at the plot point, unnecessary reflection will be reduced.

The radius of curvature r and the pitch D are not treated as independent parameters in the above-described simulation but the ratio r/D is treated as one parameter for the following reason. The lens surfaces represented by Expression (1) are similar curved surfaces when the conic constant k is constant and the ratio r/D, or the ratio of the radius of curvature r to the pitch D, is constant. Therefore, as long as the refractive index n is the same, the diameter of a beam of light incident on one lens and the amount of diffused light emitted from the lens vary from lens to lens, but an angle at which incident light is diffused and characteristics, such as light distribution, do not vary. Therefore, as long as light incident on and transmitted through the single lens 10 having a given radius of curvature r, a given pitch D, a given conic constant k, and a given refractive index n strikes the edge part E1 of the lens, if the pitch D and the radius of curvature r are changed without changing the ratio r/D, the transmitted light will similarly strike the edge part E1 of the single lens 10. In contrast, as long as light transmitted through the single lens 10 does not strike the edge part E1, if the pitch D and the radius of curvature r are changed without changing the ratio r/D, the transmitted light will not similarly strike the edge part E1 of the single lens 10. For the above reason, the ratio r/D, or the ratio of the radius of curvature r to the pitch D, is treated as one parameter in the above-described simulation.

In the graph of FIG. 3, one plot indicates the values of three variables (t/D, n, k). Therefore, one plot can be construed as representing one point on a three-dimensional graph represented by the three variables. Then, an expression of a curved surface passing through points represented by plots in the above-described three-dimensional graph or an approximated curved surface of the curved surface is obtained to derive Expression (2). If the position of a plot gently changes depending on the refractive index n and the conic constant k, as illustrated in the graph of FIG. 3, a curved surface passing through points on the three-dimensional graph that correspond to the above-described plots or an approximated curved surface of the curved surface can be obtained by using an equation with a relatively small order of a curved surface. The embodiment uses a curved surface represented by Expression (4), where d1 to d3, e1 to e3, and f1 to f3 are factors.

[Math. 2]

$$\left.\begin{array}{l} \dfrac{r}{D} = an^2 + bn + c \\ a = d1\,k^2 + d2\,k + d3 \\ b = e1\,k^2 + e2\,k + e3 \\ c = f1\,k^2 + f2\,k + f3 \end{array}\right\} \quad \cdots (4)$$

In Expression (4), the factors d1 to d3, e1 to e3, and f1 to f3 are obtained as follows. First, multiple plot values at which k = -1.1 are extracted from the graph of FIG. 3. The exemplary graph of FIG. 3 includes 11 plots at which k = -1.1. The values at the first to eleventh plots are represented as $(r/D, n)_i$ to $(r/D, n)_{11}$, respectively. For example, the least-squares method is used to obtain factors (a, b, c) in the first equation (first equation from the top) of Expression (4) so that the first equation approximates a curve passing through the values at the above-described 11 plots. The obtained factors (a, b, c) are represented as factors $(a, b, c)_{k = -1.1}$ for k = -1.1. Such calculation is performed for each of k = -1.1 to k = -0.88, thus obtaining a set of the factors (a, b, c) for the values of k, or Set = $\{(a, b, c)_{k = -1.1}$ to $(a, b, c)_{k = -0.88}\}$. Then, a set of the factor a, Set_a = $\{a_{k = -1.1}$ to $a_{k = -0.88}\}$, is extracted from the above-described set Set. The set Set_a of the factor a can be used to draw multiple (e.g., 12) plots at $(k = -1.1, a = a_{k = -1.1})$ to $(k = -0.88, a = a_{k = -0.88})$ on a graph in which the vertical axis represents a and the horizontal axis represents k. Then, for example, the least-squares method is used to obtain the factors (d1, d2, d3) in the second equation (second equation from the top) of Expression (4) so that the second equation approximates a curve passing through the above-described multiple (12) plots. Similar calculation is performed using a set Set_b of the factor b of the above-described factor set Set = $\{(a, b, c)_{k = -1.1}$ to $(a, b, c)_{k = -0.88}\}$, thus obtaining the factors (e1, e2, e3) of the third equation (third equation from the top) of Expression (4). Similar calculation is performed using a set Set_c of the factor c of the above-described factor set Set = $\{(a, b, c)_{k = -1.1}$ to $(a, b, c)_{k = -0.88}\}$, thus obtaining the factors (f1, f2, f3) of the fourth equation (fourth equation from the top) of Expression (4). Determination of the factors d1 to d3, e1 to e3, and f1 to f3 causes Expression (4) to represent an expression of a curved surface on the three-dimensional graph in which the three variables (r/D, n, k) are three-axis variables. Factor values in the second to fourth rows of Expression (2) correspond to the values of the factors d1 to d3, e1 to e3, and f1 to f3 calculated in the above-described manner.

Expression (4) represents the boundary between the occurrence and non-occurrence of unnecessary reflection, whereas the condition of Expression (2) described above corresponds to the condition for the non-occurrence of unnecessary reflection. Therefore, replacing an equal sign in the first equation (first equation from the top) of Expression (4) with a greater-than sign, which represents the condition for the non-occurrence of reflection, yields Expression (2).

Expression (2), derived in the above-described manner, represents the condition that after parallel light (light parallel to the optical axis O1) incident on the single lens 10 is refracted, the light does not strike the edge part E1 of the lens surface on the opposite side of the optical axis O1 from the light entrance side.

<Wide-Angle Characteristic Condition>

Expression (3) meeting the above-described wide-angle characteristic condition will now be demonstrated by describing exemplary derivation of Expression (3). As illustrated in the section of FIG. 1A, the single lens 10 has the maximum longitudinal dimension Hmax and a maximum width Wmax. The longitudinal dimension and width of the single lens 10 refer to the longitudinal dimension and width of a convex portion of the single lens 10.

The longitudinal dimension and width of the single lens 10 vary depending on which direction along the X-Y plane the single lens 10 is viewed from. The lens surface (convex surface) of the single lens 10 extends to the boundary with the next single lens 10. A deepest point P1 in the Z direction is located at the boundary between two adjacent single lenses 10 in an oblique direction (X direction or Y direction) relative to the row direction m1 and the column direction m2. Therefore, the maximum longitudinal dimension Hmax of the single lens 10 is a height distance from the point P1 to the apex of the lens surface when viewed in the oblique direction (X direction or Y direction) of the matrix.

The maximum width Wmax of the single lens 10 is a width thereof when viewed in the oblique direction (X direction or Y direction) relative to the row direction m1 and the column direction m2. Expressing the width with the pitch D yields Expression (5) described below.
[Math. 3]

$$W_{max} = \sqrt{2}D \quad \cdots (5)$$

The maximum longitudinal dimension Hmax of the single lens 10 corresponds to the sag z at a position where the distance h from the optical axis O1 is half the maximum width Wmax. Substituting h = {√(2)·D}/2 in Expression (1), which represents the sag z of the lens surface, yields Expression (6).
[Math. 4]

$$H_{max} = \frac{\frac{(\frac{\sqrt{2}}{2}D)^2}{r}}{1 + \sqrt{1 - \frac{(1+k)}{r^2}(\frac{\sqrt{2}}{2}D)^2}} \quad \cdots (6)$$

The wide-angle characteristic condition is adequately fulfilled by setting the aspect ratio of the single lens 10 to be greater than or equal to 1. The condition that the aspect ratio is greater than or equal to 1 means the ratio Hmax/Wmax of the maximum longitudinal dimension of the single lens 10 to the maximum width ≥ 1, or Hmax ≥ Wmax. Therefore, Expression (7) described below is derived from Expressions (5) and (6).
[Math. 5]

$$\frac{\frac{(\frac{\sqrt{2}}{2}D)^2}{r}}{1 + \sqrt{1 - \frac{(1+k)}{r^2}(\frac{\sqrt{2}}{2}D)^2}} \geq \sqrt{2}D \quad \cdots (7)$$

Simplifying Expression (7) yields Expression (3) described above. Therefore, Expression (3) represents the condition that the aspect ratio of the single lens 10 is greater than or equal to 1 to provide wide-angle diffusion of light.

<Parameter Ranges of Single Lens>

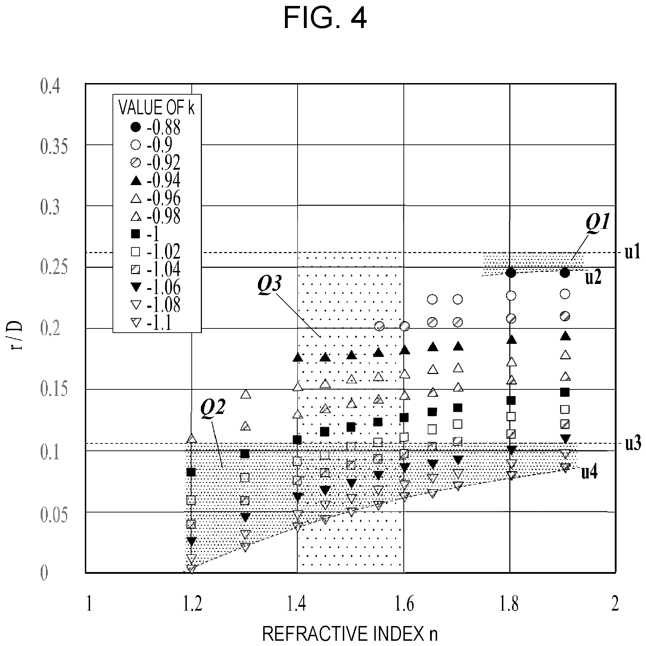

FIG. 4 is a graph illustrating exemplary parameter values used in the single lens in the embodiment. The presence of parameters that satisfy both the conditions of Expressions (1) and (2) described above and the conditions of Expressions (1) and (3) will now be demonstrated.

As illustrated in FIG. 4, the range of parameter values satisfying the conditions of Expressions (1) and (2) described above and the range of parameter values satisfying the conditions of Expressions (1) and (3) include an area where the ranges overlap each other. For example, for the conic constant k = -0.88, the range of the ratios r/D satisfying Expression (3), which represents that the aspect ratio is greater than or equal to 1, corresponds to a range of less than or equal to 0.262 (range at or below a line u1). In contrast, the range of the ratios r/D meeting Expression (2), which represents the reflection reduction condition, corresponds to a range at or above a line u2 (line along plots at which k = -0.88). For the conic constant k = - 0.88, therefore, the refractive index n and the ratio r/D of the radius of curvature to the pitch in an area Q1, where both the ranges overlap, can be used to realize the single lens 10 satisfying Expressions (1), (2), and (3).

For the conic constant k = -1.1, the range of the ratios r/D satisfying Expression (3), which represents that the aspect ratio is greater than or equal to 1, corresponds to a range of less than or equal to 0.106 (range at or below a line u3). In contrast, the range of the ratios r/D meeting Expression (2), which represents the condition to reduce unnecessary reflection, corresponds to a range at or above a line u4 (line along plots at which k = - 1.1). For the conic constant k = -1.00, therefore, the refractive index n and the ratio r/D of the radius of curvature to the pitch in an area Q2, where both the ranges overlap, can be used to realize the single lens 10 satisfying Expressions (1), (2), and (3).

For the other conic constants k = -1.08 to -0.9, similarly, parameters satisfying Expressions (1), (2), and (3) exist. The parameters can be used to realize the single lens 10 satisfying Expressions (1), (2), and (3).

<Conic Constant>

In the embodiment, the diffuser 1 and the single lens 10 can adjust distribution of light (intensity distribution of projected light) based on the conic constant. For the diffuser 1 in a first example of the embodiment, the conic constant k of each single lens 10 is set to a value given by Expression (8a) or Expression (8b). An upper limit k = -0.88 in Expression (8b) is provided to maintain the shape of the lens. A value of k of greater than the upper limit indicates that it is difficult to maintain the shape of the lens.

$$k \geq -0.96 \quad \ldots (8a)$$

$$-0.88 \geq k \geq -0.96 \quad \ldots (8b)$$

For the diffuser 1 in a second example of the embodiment, the conic constant k of the multiple single lenses 10 is set to a value given by Expression (9).

$$-0.96 > k \geq -1.02 \quad \ldots (9)$$

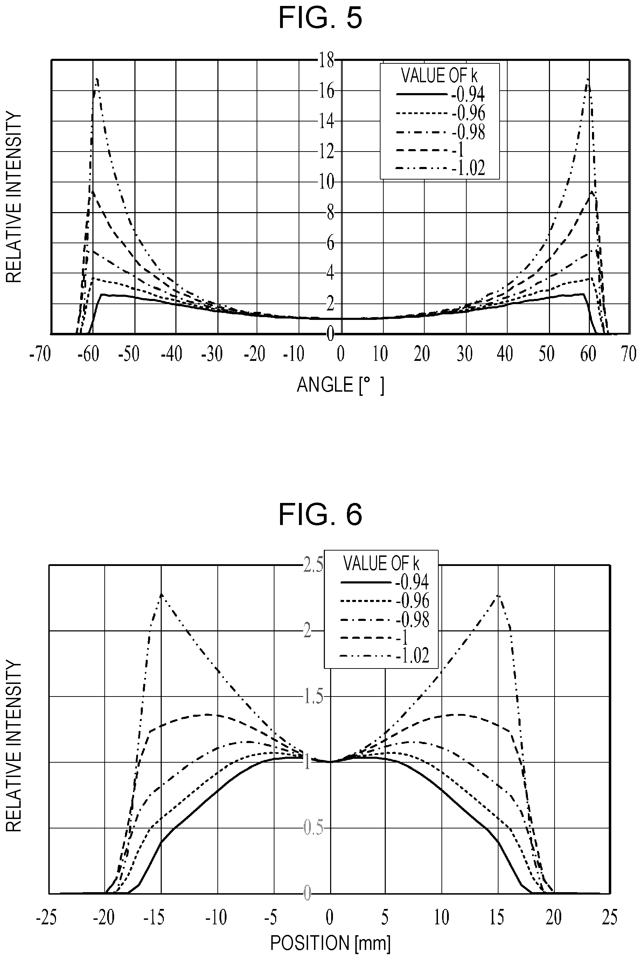

FIG. 5 is an angle distribution graph illustrating exemplary light distribution through the diffuser in the embodiment. FIG. 6 is an illumination distribution graph illustrating exemplary light distribution through the diffuser in the embodiment. In FIG. 5, the horizontal axis represents an angle, and the origin represents the middle of the diffuser 1. FIG. 6 shows the illumination distribution obtained by projecting light through the diffuser 1 onto a measurement plane at a distance of 10 mm from the diffuser 1 in the direction along the optical axis O1. In FIG. 6, the horizontal axis represents a position on the measurement plane, and the origin represents a position where the optical axis O1 of the diffuser 1 intersects the measurement plane. The pitch D of the single lenses 10 ranges from, for example, 10 $\mu$m to 100 $\mu$m.

As illustrated in FIG. 5, a conic constant k of -0.96 or greater leads to substantially uniform light distribution for each angle in a wide angle range of -45° to 45°. Therefore, the diffuser 1 in the first example of the embodiment exhibits light distribution characteristics providing uniform angle distribution of diffused light in a wide range.

As illustrated in FIG. 6, a conic constant k satisfying $-0.96 \geq k \geq -1$ leads to uniform illumination distribution of diffused light projected on the plane (plane perpendicular to the optical axis O1). Therefore, the diffuser 1 in the second example of the embodiment exhibits light distribution characteristics providing uniform illumination distribution of diffused light in the direction to the plane. A conic constant k satisfying $-0.98 \geq k \geq -1.0$ leads to light distribution characteristics providing more uniform illumination distribution in the direction to the plane.

<Refractive Index of Lens Array and Stress Resistance of Diffuser>

The lens array 3, which is made of a resin material, and the transparent substrate 2 are joined together in surface contact. Therefore, thermal expansion of the lens array 3 and the transparent substrate 2 causes stress resulting from the difference in coefficient of thermal expansion therebetween at an interface between the lens array 3 and the transparent substrate 2.

In the embodiment, the lens array 3 may be made of a resin material satisfying $1.4 \leq$ refractive index $n \leq 1.6$. In this case, values in a range corresponding to an area Q3 in FIG. 4 are used for the parameters of the single lens 10. Some resin materials were used to form samples of the lens array 3, and stress resistance tests were performed on samples of the diffuser 1 including the formed samples. The result of the tests demonstrates that the use of a resin satisfying $1.4 \leq$ refractive index $n \leq 1.6$ provides significantly high stress resistance. The refractive index n of a resin correlates with the coefficient of thermal expansion and intensity of the resin, except for some exceptional resins. In many cases, a resin material having the above-described refractive index can be used for the lens array 3, thus allowing the diffuser 1 to exhibit high stress resistance.

Furthermore, the lens array 3 may be made of a resin material having a tensile strength of 6.0 MPa or less and a tensile elongation at break of 50% or greater. Using such a resin material allows the diffuser 1 to have high stress resistance. Furthermore, the lens array 3 may be made of silicone resin. The above-described refractive index and the above-described stress resistance can be easily achieved by using, for example, silicone resin.

<Method of Fabrication>

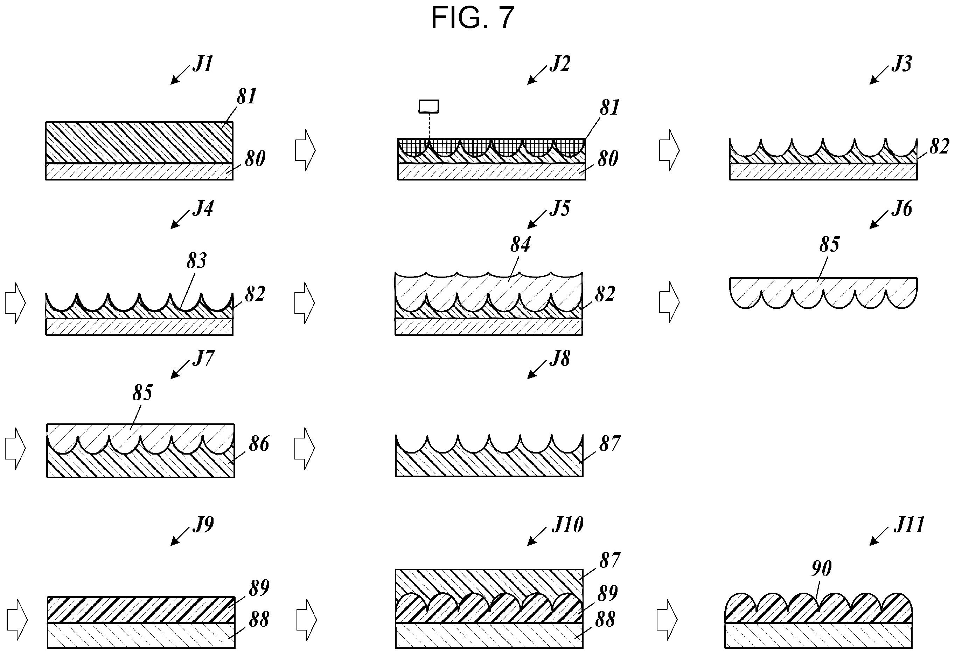

FIG. 7 is a diagram illustrating an exemplary method of fabricating the diffuser according to the embodiment. The method of fabricating the diffuser 1 includes a master-mold forming process (J1 to J3) of forming a master mold for the lens array 3, an electroformed-mold forming process (J4 to J6) of forming an electroformed mold, a secondary-mold forming process (J7, J8) of forming a secondary mold, and an imprinting process (J9 to J11) of shaping resin on a glass substrate.

In the master-mold forming process, a resist resin 81 is applied to a transfer substrate 80 and is subjected to pretreatment (e.g., baking) (step J1). After that, the resist resin is subjected to gray scale exposure by laser lithography (step J2). After the exposure, development is performed (step J3), thereby forming a master mold 82. The master mold 82 having a mold shape that provides an array of lens surfaces of the above-described single lenses 10 is prepared in the above-described manner.

In the electroformed-mold forming process, a conductive film 83 is formed on the master mold 82 by, for example, sputtering (step J4). A conductor 84 of, for example, nickel (Ni), is formed by transferring the master mold 82 through electrolytic plating (step J5). The conductor 84 is released from the mold and is polished (step J6), thereby forming an electroformed mold 85.

In the secondary-mold forming process, a thermoplastic resin film 86 is thermally imprinted with the electroformed mold 85 (step J7). The resin film 86 is released from the electroformed mold 85 (step J8), thereby forming a secondary mold 87 made of the resin material.

In the imprinting process, for example, an ultraviolet-curable transparent resin 89 is applied to a glass substrate 88 (step J9). The secondary mold 87 is placed against the transparent resin 89 on the glass substrate 88, and the transparent resin 89 is cured by, for example, ultraviolet irradiation (step J10). The cured transparent resin 89 is released from the mold (step J11), thereby obtaining an intermediate product 90 of the diffuser 1. After that, the intermediate product 90 is subjected to characteristics evaluation, dicing, visual inspection, and the like, thereby obtaining the diffuser 1.

The lens array 3 with a fine pattern, for example, a pitch of 100 $\mu$m or less and a curvature of 20 $\mu$m or less, can be fabricated with high molding accuracy by the above-described fabrication method.

In the embodiment, as described above, the diffuser 1 includes the lens array 3 including the multiple single lens 10, and the lens surface of each of the multiple single lenses 10 satisfies Expressions (1) to (3) described above. Therefore, the diffuser 1 can diffuse light at a wide angle with little disturbance in the radiation pattern.

Expression (2) is derived by obtaining parameter values at which the distance L in FIG. 2 is zero through simulation and fitting the parameter values to a function model. Therefore, there are parameter values that are slightly outside the range of parameter values satisfying the condition of Expression (2) and that cause incident light parallel to the optical axis O1 to strike no edge part E1 of the single lens 10 and thus cause no disturbance in the radiation pattern. Instead of the condition of Expression (2), therefore, a condition that a ray of light incident on the single lens 10 and parallel to the optical axis O1 does not strike an edge part of the single lens 10 may be used as the condition for the diffuser 1 according to the embodiment. If the diffuser 1 satisfies this condition, the diffuser 1 can achieve wide-angle light diffusion with little disturbance in the radiation pattern.

In the diffuser 1 according to the embodiment, the use of the conic constant k satisfying Expression (8a) or (8b) described above allows uniform angle distribution of diffused light in a region irradiated with the diffused light. The above-described light distribution enables the diffuser 1 to be suitably used for applications that require uniform intensities of light applied to positions at an equal distance from the diffuser 1.

In the diffuser 1 according to the embodiment, the use of the conic constant k satisfying Expression (9) allows uniform illumination distribution of diffused light applied to a plane perpendicular to the optical axis. The above-described light distribution characteristics enable the diffuser 1 to be suitably used for applications that require such light distribution.

In the embodiment, the diffuser 1 includes the transparent substrate 2 joined to the lens array 3. The refractive index n of the single lens 10 satisfies $1.4 \leq n \leq 1.6$. Such a configuration achieves high stress resistance at the interface between the transparent substrate 2 and the lens array 3. The above-described stress resistance allows the diffuser 1 to ensure high reliability for use in a variety of thermal environments. Furthermore, the use of silicone resin as a material for the lens array 3 further improves the above-described stress resistance, thus allowing the diffuser 1 to ensure higher reliability for use in a variety of thermal environments.

<Light-Emitting Device and Sensor Module>

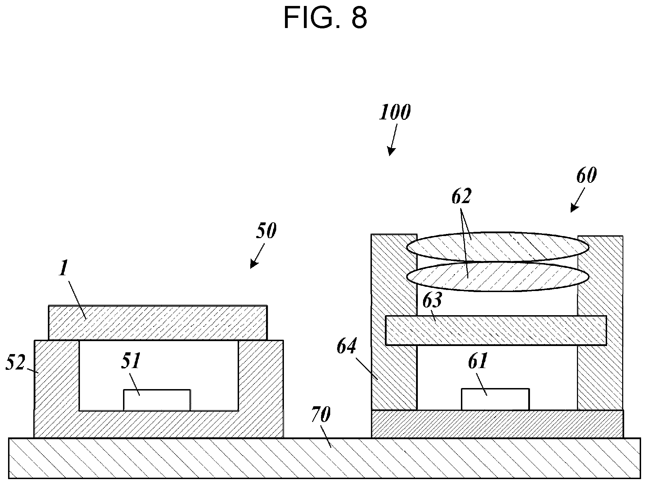

FIG. 8 is a diagram illustrating a light-emitting device according to an embodiment of the present disclosure and a sensor module according to an embodiment of the present disclosure. A light-emitting device 50 according to the embodiment includes a light-emitting element 51 and the diffuser 1 disposed on a path of light that is emitted from the light-emitting element 51. A lens surface (lens array 3) of the diffuser 1 may face the light-emitting element 51. The light-emitting element 51 emits laser light. The light-emitting element 51 may be configured to emit non-laser light. The light-emitting element 51 may be contained in a package 52 including a cavity structure. The diffuser 1 may be joined to the package 52. The diffuser 1 may also serve as a lid of the package 52.

FIG. 8 illustrates an example in which the light-emitting device 50 according to the embodiment is included in a sensor module 100. The light-emitting device 50 according to the embodiment may be configured to emit diffused light for any application other than sensing.

In the embodiment, the light-emitting device 50 includes the diffuser 1 according to the foregoing embodiment, and thus can emit wide-angle diffused light. Furthermore, if the diffuser 1 has high resistance to thermal stress, the light-emitting device 50 can ensure high reliability to withstand use in a variety of thermal environments.

In the embodiment, as illustrated in FIG. 8, the sensor module 100 includes the light-emitting device 50 and a light-receiving device 60. The light-emitting device 50 emits diffused light. The light-receiving device 60 is capable of receiving light emitted from the light-emitting device 50. The light-receiving device 60 may directly receive light emitted from the light-emitting device 50 or may receive reflected light of the emitted light. The sensor module 100 may be configured to perform detection in any manner. For example, the sensor module 100 may be a light detection and ranging (LiDAR) sensor or may be a photoelectric sensor that detects the presence or absence of an object on a path of light. The light-emitting device 50 and the light-receiving device 60 may be mounted on a single module substrate 70 or may be mounted on different module substrates.

The light-receiving device 60 includes a light-receiving element 61, such as a photodiode. The light-receiving device 60 may include lenses 62 to focus incident light onto the light-receiving element 61 and a filter element 63 to narrow the wavelength of incident light. The light-receiving element 61 may be contained in a package 64. The lenses 62 and the filter element 63 may be supported by the package 64.

In the embodiment, the sensor module 100 includes the diffuser 1 according to the foregoing embodiment, and thus can perform wide-angle sensing with wide-angle diffused light. Furthermore, if the diffuser 1 has high stress resistance, the sensor module 100 can ensure high reliability to withstand use in a variety of thermal environments.

The embodiments of the present disclosure have been described above. However, the diffuser, the light-emitting device, and the sensor module of the present disclosure are not limited to those described in the above embodiments. For example, the above-described embodiment illustrates the example in which the multiple single lenses 10 have the same height and the same shape. Simple lenses having different heights or different shapes may be mixed. The diffuser may include an array of multiple single lenses having randomly different heights that make it difficult for rays of light diffused by the multiple single lenses to interfere with each other. To make it difficult for rays of light diffused by the multiple single lenses to interfere with each other, the multiple single lenses may be arrayed at randomly different pitches $D = D1 + \varepsilon$ where $\varepsilon$ is a random shift and $D1$ is a fixed value. The other details illustrated in the embodiments can be appropriately changed without departing from the spirit and scope of the invention.

INDUSTRIAL APPLICABILITY

The present disclosure is applicable to a diffuser, a light-emitting device, and a sensor module.

REFERENCE SIGNS

| 1 | diffuser |
|---|---|
| 2 | transparent substrate |
| 3 | lens array |
| 10 | single lens |
| D | pitch |
| O1 | optical axis |
| Hmax | maximum longitudinal dimension |
| Wmax | maximum width |
| E1 | edge part |
| 50 | light-emitting device |
| 51 | light-emitting element |
| 52 | package |
| 60 | light-receiving device |
| 61 | light-receiving element |
| 70 | module substrate |
| 100 | sensor module |

**Claims**

1.   A diffuser comprising:

a lens array comprising multiple single lenses, wherein each of the multiple single lenses satisfies Expression (1), Expression (2), and Expression (3)
[Math. 1]

$$z = \frac{\frac{h^2}{r}}{1 + \sqrt{1 - \frac{(1+k)}{r^2}h^2}} \quad \cdots (1)$$

$$\left. \begin{array}{l} \frac{r}{D} \geq an^2 + bn + c \\ a = 8.84k^2 + 18.72k + 9.81 \\ b = -31.73k^2 - 67.38k - 35.32 \\ c = 29.42k^2 + 63.24k + 33.63 \end{array} \right\} \quad \cdots (2)$$

$$\frac{r}{D} \leq \frac{5 + 4k}{4\sqrt{2}} \quad \cdots (3)$$

where z is sag, h is a distance from an optical axis of the single lens, r is a radius of curvature, k is a conic constant, D is a pitch, and n is a refractive index.

2.   A diffuser comprising:

a lens array comprising multiple single lenses, wherein each of the multiple single lenses satisfies Expression (1) and Expression (3), and wherein a ray of light incident on the single lens and parallel to an optical axis of the single lens does not strike an edge part of the single lens
[Math. 2]

$$z = \frac{\frac{h^2}{r}}{1 + \sqrt{1 - \frac{(1+k)}{r^2}h^2}} \quad \cdots (1)$$

$$\frac{r}{D} \leq \frac{5 + 4k}{4\sqrt{2}} \quad \cdots (3)$$

where z is sag, h is a distance from the optical axis of the single lens, r is a radius of curvature, k is a conic constant, and D is a pitch.

3.   The diffuser according to claim 1 or 2, wherein $k \geq$ -0.96.

4.   The diffuser according to claim 1 or 2, wherein -0.96 $\geq k \geq$ -1.

5.   The diffuser according to any one of claims 1 to 4, further comprising:

a transparent substrate joined to the lens array, wherein the single lens has a refractive index n satisfying $1.4 \leq n \leq 1.6$.

6.   The diffuser according to claim 5, wherein the lens array comprises silicone resin.

7.   A light-emitting device comprising:

a light-emitting element; and
the diffuser according to any one of claims 1 to 6, the diffuser being disposed on a path of light that is emitted from the light-emitting element.

8. A sensor module comprising:

the light-emitting device according to claim 7; and
a light-receiving device capable of receiving light emitted from the light-emitting device.

## FIG. 1A

$O1$   $O1$   $O1$   $O1$   $O1$   $O1$   $O1$   $O1$

$X$   $Y$

$Z$

$10$   $10$   $10$   $10$   $10$   $10$   $10$   $H_{max}$   $10$

$3$    $P1$    $2$    $O1$

$W_{max} = \sqrt{2}\,D$

## FIG. 1B

$X$

$m1$

$Z$   $Y$

$m2$

$1$

$10$     $P1$

$A$           $A$

$D$        $D$      $W_{max} = \sqrt{2}\,D$

# FIG. 2

# FIG. 3

# FIG. 4

# FIG. 5

# FIG. 6

# FIG. 7

EP 4 270 064 A1

FIG. 8

## INTERNATIONAL SEARCH REPORT

| | International application No. |
|---|---|
| | **PCT/JP2021/047589** |

**A.    CLASSIFICATION OF SUBJECT MATTER**

*G02B 5/02*(2006.01)i; *F21V 5/00*(2018.01)i; *F21V 5/04*(2006.01)i; *G02B 3/00*(2006.01)i
FI:    G02B5/02 C; F21V5/00 320; F21V5/00 510; F21V5/04 200; F21V5/04 350; F21V5/04 400; G02B3/00 A

According to International Patent Classification (IPC) or to both national classification and IPC

**B.    FIELDS SEARCHED**

Minimum documentation searched (classification system followed by classification symbols)

G02B5/02; F21V5/00; F21V5/04; G02B3/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2006/036032 A1 (SONY CORP.) 06 April 2006 (2006-04-06) page 12, line 4 to page 14, line 7, fig. 3, 4 | 1-5, 7, 8 |
| Y | page 12, line 4 to page 14, line 7, fig. 3, 4 | 6 |
| Y | JP 2020-64088 A (KONICA MINOLTA, INC.) 23 April 2020 (2020-04-23) paragraphs [0026], [0038], [0041]-[0044], fig. 9 | 6 |
| A | WO 2015/182619 A1 (NALUX CO., LTD.) 03 December 2015 (2015-12-03) paragraphs [0080]-[0102] | 1-8 |
| A | JP 2012-199063 A (TOPPAN PRINTING CO., LTD.) 18 October 2012 (2012-10-18) paragraphs [0061]-[0064], fig. 10 | 1-8 |

☐ Further documents are listed in the continuation of Box C.          ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | "&"    document member of the same patent family |
| "P"    document published prior to the international filing date but later than the priority date claimed | |

| Date of the actual completion of the international search | Date of mailing of the international search report |
|---|---|
| **15 February 2022** | **01 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2021/047589**

| Patent document cited in search report | | | Publication date (day/month/year) | Patent family member(s) | | | Publication date (day/month/year) |
|---|---|---|---|---|---|---|---|
| WO | 2006/036032 | A1 | 06 April 2006 | US paragraphs [0107]-[0117], fig. 3, 4 | 2007/0242478 | A1 | |
| | | | | EP | 1795923 | A1 | |
| | | | | CN | 1947034 | A | |
| | | | | KR | 10-2007-0061478 | A | |
| JP | 2020-64088 | A | 23 April 2020 | WO | 2018/154873 | A1 | |
| WO | 2015/182619 | A1 | 03 December 2015 | US paragraphs [0117]-[0156] | 2017/0074481 | A1 | |
| | | | | CN | 106461815 | A | |
| JP | 2012-199063 | A | 18 October 2012 | (Family: none) | | | |

Form PCT/ISA/210 (patent family annex) (January 2015)

**EP 4 270 064 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017026662 A